**Europäisches Patentamt**

**European Patent Office**

**Office européen des brevets**

(19)

(11) Veröffentlichungsnummer: **0 084 815**
**A2**

(12) # EUROPÄISCHE PATENTANMELDUNG

(21) Anmeldenummer: **83100244.9**

(51) Int. Cl.³: **F 01 K 13/02,** F 01 K 3/00

(22) Anmeldetag: **13.01.83**

(30) Priorität: **18.01.82 DE 3201339**

(43) Veröffentlichungstag der Anmeldung: **03.08.83**
**Patentblatt 83/31**

(84) Benannte Vertragsstaaten: **CH FR LI SE**

(71) Anmelder: **KRAFTWERK UNION**
**AKTIENGESELLSCHAFT, Wiesenstrasse 35,**
**D-4330 Mülheim (Ruhr) (DE)**

(72) Erfinder: **Franck, Eberhard, Dr., Käferhölzlein 7,**
**D-8521 Hannberg (DE)**
Erfinder: **Meyer-Pittroff, Roland, Dr., Am Haidbuckel 30,**
**D-8501 Eckental (DE)**

(74) Vertreter: **Mehl, Ernst, Dipl.-Ing. et al, Postfach 22 01 76,**
**D-8000 München 22 (DE)**

(54) **Wärmekraftwerk.**

(57) In einer Anlage zur Energieumwandlung mit einem Block (14) aus Wasserelektrolysezellen, dem ein Wärmetauscher (14a) der Verlustwärme zugeordnet ist, ist zur Verbesserung des Gesamtwirkungsgrades der Anlage der Wärmetauscher (14a) mit einem wärmeverbrauchenden Anlageteil gekoppelt.

0084815

Wärmekraftwerk

Die Erfindung bezieht sich auf ein Wärmekraftwerk mit einem elektrischen Generator und mit einem am Generator angeschlossenen Block aus Elektrolysezellen, dem eine Heizanlage zur Ableitung der Verlustwärme zugeordnet ist.

Ein solches Wärmekraftwerk ist in der Zeitschrift "Chemical Engineering News 46 (1968)" als GE-Vorschlag für die Wasserstofferzeugung mittels Hochtemperatur-Dampfphase-Elektrolyse schematisch dargestellt. Bei dieser Anlage wird das in einem chemischen Reduktionserzeuger mit fossilen Brennstoffen und Wasserdampf gebildete Reduktionsgas einem Hochtemperatur-Dampfphase-Elektrolyseaggregat zugeleitet und das aus dem Elektrolyseaggregat austretende Reduktionsgas zur Beheizung eines Dampfkessels verwendet. Mit dem so erzeugten Dampf wird ein Turbogenerator angetrieben. Die erzeugte elektrische Energie wird in das Elektrolyseaggregat eingespeist. Das im Elektrolyseaggregat erzeugte Wasserstoffgas wird über einen Wärmetauscher geleitet. Die entnommene Wärme wird in das Elektrolyseaggregat zurückgeführt. Das Wasserstoffgas wird vom Wasserdampf befreit. Es ist eine Eigenart dieses Wärmekraftwerks, daß es auch bei der Auskopplung mechanischer oder elektrischer Energie nur als Grundlastkraftwerk betrieben werden kann, weil die Hochtemperatur-Dampfphasen-Elektrolyse nur bei konstanter elektrischer Leistungszufuhr wirtschaftlich

BAD ORIGINAL

0084815

betrieben werden kann.

Aus der deutschen Auslegeschrift 25 49 471 ist ein Verfahren zur elektrochemischen Herstellung von Wasserstoff bekannt. Die dort offenbarten Elektrolysezellen sind Hochtemperatur-Dampfphasen-Elektrolysezellen, die einen aus einem keramischen Werkstoff bestehenden Feststoffelektrolyten aufweisen. Die aus Wasserdampf, heißen Wasserstoff- und Sauerstoffgas mit einer Temperatur von etwa 1000°C bestehenden Elektrolyseprodukte werden durch die den Elektrolysezellen zugeordneten Wärmetauscher geleitet. Dadurch wir die freiwerdende Hochtemperaturwärme mit Hilfe von Speisedampf, der durch diese Wärmetauscher hindurch und nach dem Überhitzen in einer Hochtemperaturwärmequelle in die Hochtemperatur-Dampfphasen-Elektrolysezellen geleitet wird, in den Elektrolyseprozeß rekuperiert. Der Anschluß einer solchen Anlage an ein Wärmekraftwerk führt zu den gleichen Einschränkungen der Betriebsweise, wie sie anhand des vorigen Vorschlags erläutert wurden.

Der Erfindung liegt die Aufgabe zugrunde, den Gesamtwirkungsgrad eines Wärmekraftwerks mit einem an einem Generator angeschlossenen Block aus Elektrolysezellen hinsichtlich der Energieausnutzung zu verbessern und die Energie möglichst preisgünstig bereit zu stellen.

Diese Aufgabe wird bei einem Wärmekraftwerk der eingangs genannten Art erfindungsgemäß durch die im kennzeichnenden Teil des Patentanspruches 1 aufgeführten Merkmale gelöst.

Bei der erfindungsgemäßen Anordnung kann die an das elektrische Verbrauchernetz abgegebene elektrische Leistung dem Bedarf in weiten Grenzen angeßaßt werden und wird Sauerstoff und Wasserstoff mit Spitzenstrom erzeugt. Das in dem Block aus Flüssigwasser-Elektrolysezellen

0084815

gewonnene Wasserstoffgas kann in Gasflaschen abgefüllt und anderweitig verwendet werden. Günstig ist es jedoch, wenn dem Block aus Flüssigkwasser-Elektrolysezellen ein Speichertank für Wasserstoffgas mit nachgeschalteter, zur Anlage gehörender Verbrennungsvorrichtung für Wasserstoff zugeordnet ist. Auf diese Weise kann die Verbrennungswärme des Wasserstoffgases zur Verbesserung des Wirkungsgrades des Wärmekraftwerkes herangezogen werden. Für die Elektrolyse eignen sich gerade Flüssigwasser-Elektrolysezellen, die keiner Vorwärmung des eingespeisten Wassers bedürfen und daher momentan zugeschaltet werden können. Die bei der Elektrolyse anfallende Verlustwärme wird einer weiteren Nutzung zugeführt, wodurch sich der Gesamtwirkungsgrad des Wärmekraftwerks weiter verbessern läßt.

Die Ausnutzung der Kraftwerksleistung läßt sich durch die im kennzeichnenden Teil des Patentanspruches 2 aufgeführten, die Erfindung weiterbildenden Merkmale verbessern. Durch sie wird eine sehr schnelle Anpassung der an das elektrische Verbrauchernetz abgegebenen Leistung ermöglicht. Dies hat zur Folge, daß auch kurzzeitige Leistungsspitzen durch vermehrte Erzeugung von Wasserstoff und Sauerstoff ausgeregelt werden können. Dies ist im Hinblick auf den Gesamtwirkungsgrad der Anlage günstiger als die Drosselung der Dampfzufuhr an der Turbine.

Weitere vorteilhafte Ausgestaltungen des erfindungsgemäßen Wärmekraftwerks sind in den Patentansprüchen 3 bis 12 angegeben.

Weitere Einzelheiten der Erfindung werden anhand zweier in den Zeichnungen dargestellter Ausführungsbeispiele näher erläutert:

Fig. 1 zeigt schematisch ein als Kombination von Grundlastkraftwerk mit einem Block aus Flüssigwasser-Elektrolysezellen ......

ausgebildete erfindungsgemäße Anlage.

Fig. 2 zeigt schematisch eine Inselanlage mit einem Block aus Wasserelektrolysezellen, die zusammen mit einem nicht dargestellten, weit entfernten Grundlastkraftwerk eine erfindungsgemäße Anlage bildet.

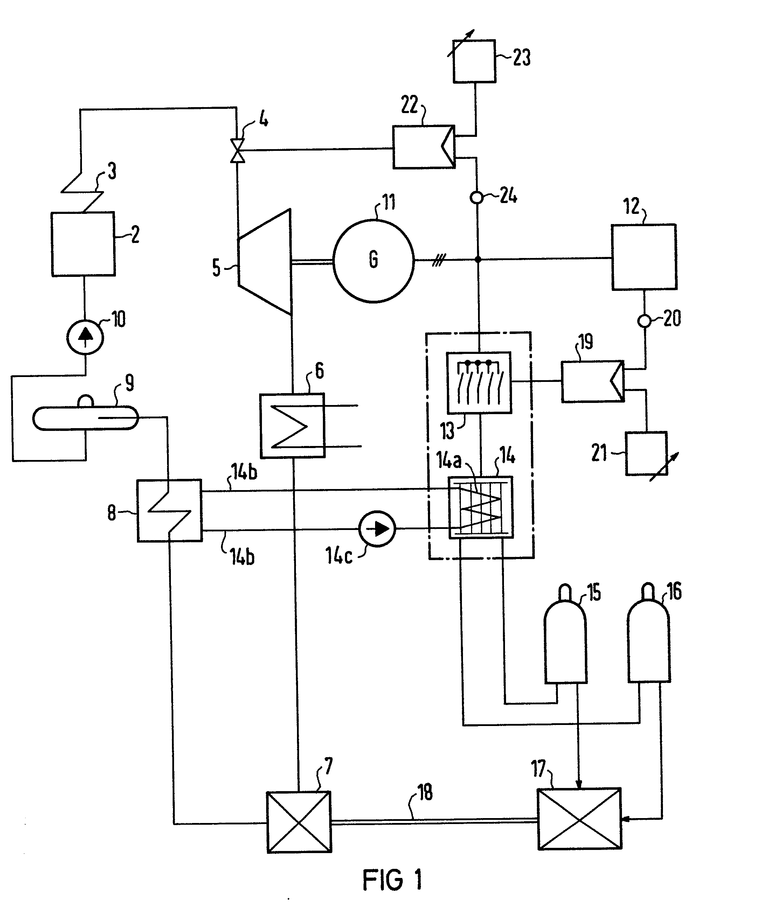

In Fig. 1 weist das Grundlastkraftwerk einen Dampferzeuger 2 mit nachgeschaltetem Überhitzer 3 auf, an dem über ein als Stellorgan wirksames Ventil 4 der Frischdampfstutzen einer Dampfturbine 5 angeschlossen ist. Der Abdampfstutzen dieser Dampfturbine 5 ist mit einem Kondensator 6 verbunden, dessen Kondensataustritt über den Ausgangswärmetauscher einer Kompressionswärmepumpe 7 und einen Kondensatvorwärmer 8 zu einem Speisewasserbehälter 9 geführt ist. Am Speisewasserbehälter 9 ist wiederum über eine Pumpe 10 der Dampferzeuger 2 angeschlossen.

Günstigerweise weist das als Grundlastkraftwerk wirksame Wärmekraftwerk einen elektrischen Generator 11 auf, dessen Welle mit der Welle der Dampfturbine 5 gekoppelt ist. An diesem elektrischen Generator 11 ist neben einem elektrischen Verbrauchernetz 12 über eine als Stellglied wirksame elektrische Schaltvorrichtung 13 ein Block 14 aus Wasserelektrolysezellen angeschlossen.

Vorteilhafterweise sind dem Block 14 aus Wasserelektrolysezellen ein Speichertank 15 für Wasserstoffgas und ein Speichertank 16 für Sauerstoffgas zugeordnet, die das bei der Wasserelektrolyse in den Wasserelektrolysezellen des Blocks 14 entstehende Wasserstoffgas und Sauerstoffgas aufnehmen. Den beiden Speichertanks 15 und 16 ist als Verbrennungsvorrichtung für das Wasserstoffgas im Tank 15 ein Gasmotor 17 nachgeschaltet, der über eine Welle 18 die Kompressionswärmepumpe 7 antreibt, so daß Wärme beispielsweise aus der Umgebungsluft in das vom Kondensator 6 zum Kondensatvorwärmer 8 strömende Kondensat gepumpt wird.

0084815

Günstigerweise ist eine einen Primärregler 19 aufweisende Regelvorrichtung vorgesehen. Dieser Primärregler 19 ist an einem Meßfühler 20 für die Istfrequenz im elektrischen Verbrauchernetz 12 und an einem Sollwertgeber 21 für die Sollfrequenz des elektrischen Verbrauchernetzes 12 angeschlossen. Der Primärregler 19 steht ferner in Wirkverbindung mit der ihm als Stellglied zugeordneten elektrischen Schaltvorrichtung 13.

Steigt die in das elektrische Verbrauchernetz 12 einzuspeisende elektrische Leistung an, so fällt die Istfrequenz in diesem elektrischen Verbrauchernetz 12 ab, und der Primärregler 19 schaltet mit Hilfe der Schaltvorrichtung 13 nacheinander genau so viele Elektrolysezellen des Blocks 14 vom Generator 11 ab, bis der Istwert der Frequenz des elektrischen Verbrauchernetzes 12 wieder gleich dem Sollwert dieser Frequenz ist. Verringert sich die in das elektrische Verbrauchernetz 12 einzuspeisende elektrische Leistung, so steigt diese Frequenz im elektrischen Verbrauchernetz 12 an, und der Primärregler 19 schaltet dementsprechend nacheinander genausoviel Elektrolysezellen des Blocks 14 wieder an den Generator 11, bis der Istwert der Frequenz im elektrischen Verbrauchernetz 12 gleich dem Sollwert dieser Frequenz ist.

Auf diese Weise wird die Leistung des Blocks 14 aus Wasserelektrolysezellen so geregelt, daß sie gleich der Differenz zwischen der Leistung des elektrischen Generators 11 und der in das Verbrauchernetz 12 einzuspeisenden elektrischen Leistung ist. Da die in den Wasserelektrolysezellen des Blocks 14 ablaufenden Elektrolyseprozesse außerordentlich trägheitsarm sind, können mit dem Primärregler 19 auch kurzzeitige schnelle Laständerung im elektrischen Verbrauchernetz 12 ohne weiteres abgefangen werden.

Der Primärregelkreis mit dem Primärregler 19 gestattet es auch, das Grundlastkraftwerk mit Hilfe eines Leistungsreglers 22 auf konstante Leistung des elektrischen Generators 11 zu regeln.

Dem Leistungsregler 22 sind ein Sollwertgeber 23 für die Solleistung und ein am Ausgang des Generators 11 angeschlossener Meßfühler 24 für die Istleistung des Generators 11 sowie das Ventil 4 als Stellorgan zugeordnet.

Es ist vorteilhaft, wenn der als Verbrennungsvorrichtung für Wasserstoffgas aus dem Speichertank 15 dienende Gasmotor 17 einen nicht dargestellten Zusatzwärmetauscher zur Ableitung der Verlustwärme des Gasmotors 17 aufweist, der mit einem wärmeverbrauchenden Anlagenteil, also beispielsweise mit den vom Kondensator 6 zum Kondensatvorwärmer 8 geführten Zuführungsrohren für Kondensat gekoppelt ist.

Ferner ist es günstig, wenn in den Wasserelektrolysezellen des Blocks 14 eine Kühlspirale 14a angeordnet ist, die über Zuführungsleitungen 14b für Kühlmittel, z. B. Wasser, die eine Kühlmittelpumpe 14c enthalten, mit der Primärseite des Kondensatvorwärmers 8 verbunden ist.

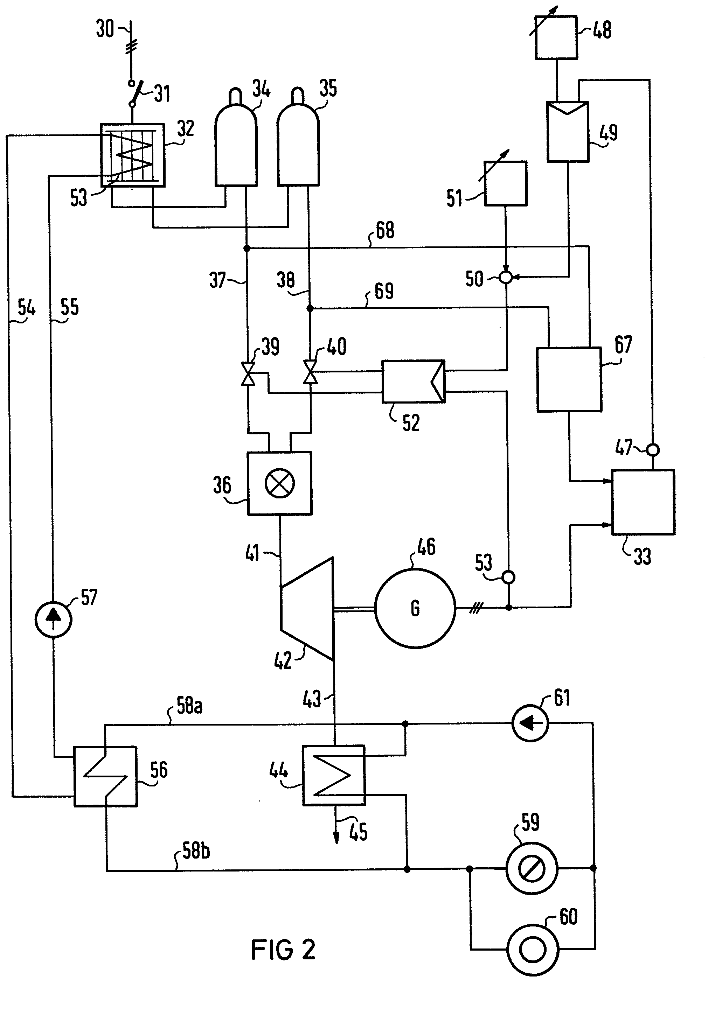

Die Anlage zur Energieumwandlung nach Fig. 2 weist ein nicht dargestelltes, weit entferntes Grundlastkraftwerk mit einem elektrischen Netz 30 auf, an das über eine elektrische Schaltvorrichtung 31 ein Block 32 aus Wasserelektrolysezellen anschließbar ist. Dieser Block aus Wasserelektrolysezellen 32 kann sich beispielsweise in einem weit vom nicht dargestellten Grundlastkraftwerk entfernten Wohngebiet befinden, dessen elektrisches Verbrauchernetz 33 aus dem elektrischen Netz 30 des nicht dargestellten Grundlastkraftwerkes gespeist wird.

Dem Block 32 aus Wasserelektrolysezellen sind jeweils ein

0084815

Speichertank 34 und 35 für in den Wasserelektrolysezellen gewonnenes Wasserstoffgas und Sauerstoffgas zugeordnet. Als Verbrennungsvorrichtung für das im Speichertank 34 gespeicherte Wasserstoffgas ist ein sogenannter $H_2/O_2$-Dampferzeuger 36 vorgesehen, wie er beispielsweise auf den Seiten 91 bis 95 des "Jahresberichtes 1980" der Deutschen Forschungs- und Versuchsanstalt für Luft- und Raumfahrt, Stuttgart, beschrieben ist. Diesem $H_2/O_2$-Dampferzeuger 36 werden Wasserstoffgas und Sauerstoffgas aus den Speichertanks 34 und 35 über Zuführungsleitungen 37 und 38 zugeführt, die als Stellorgan wirkende Ventile 39 und 40 enthalten. In diesem $H_2/O_2$-Dampferzeuger 36 wird das Wasserstoffgas mit Hilfe des Sauerstoffgases direkt zu Wasserdampf verbrannt, der über die Frischdampfaustrittsleitung 41 des $H_2/O_2$-Dampferzeugers 36 dem Frischdampfstutzen einer Dampfturbine 42 zugeführt wird. Der Abdampf der Dampfturbine 42 am Abdampfstutzen 43 wird über einen Kondensator 44 geführt. Das am Kondensataustritt 45 des Kondensators 44 anfallende kondensierte Wasser kann verworfen oder z. B. auch zum Block 32 aus Wasserelektrolysezellen zurückgeführt werden.

Die Antriebswelle der Dampfturbine 42 ist mit der Welle eines elektrischen Generators 46 gekoppelt, der am elektrischen Verbrauchernetz 33 des Wohngebietes angeschlossen ist. Dem elektrischen Verbrauchernetz 33 ist ein Meßfühler 47 für den Istwert der Frequenz in diesem elektrischen Verbrauchernetz 33 zugeordnet. Ferner ist ein Sollwertgeber 48 für diese Frequenz des elektrischen Verbrauchernetzes 33 vorgesehen. Am Sollwertgeber 48 und am Meßfühler 47 ist ein Primärregler 49 angeschlossen, dessen Ausgangssignal in einer Additionsstelle 50 zum Ausgangssignal eines Sollwertgebers 51 für die Leistung des Generators 46 addiert wird.

An der Additionsstelle 50 und an einem Meßfühler 53 für die Leistung des elektrischen Generators 46 ist ein Regler 52 angeschlossen, der in Wirkverbindung mit den als Stellorgan dienenden Ventilen 39 und 40 in den Zuführungsleitungen 37 und 38 steht. Auf diese Weise bilden die Dampfturbine 42 und der elektrische Generator 46 ein Spitzenlastkraftwerk für das elektrische Verbrauchernetz 33, dessen Grundlast aus dem elektrischen Netz 30 des nicht dargestellten, weit entfernten Grundlastwerkes gedeckt wird.

In den Wasserelektrolysezellen des Blockes 32 befindet sich eine Kühlschlange 53, die über zwei Zuführungsleitungen 54 und 55 mit einem Wärmetauscher 56 verbunden ist. Die Zuführungsleitung 55 weist eine Pumpe 57 auf, mit der in der Kühlschlange 53, in den Zuführungsleitungen 54 und 55 sowie in der Primärseite des Wärmetauschers 56 ein Umlauf des Kühlmittels, beispielsweise Wasser, aufrecht erhalten wird. Als wärmeverbrauchender Anlagenteil ist an der Sekundärseite des Wärmetauschers 56 über Zuführungsleitungen 58a und 58b für ein Wärmetransportmedium, z. B. Wasser, eine Heizanlage 59 vorzugsweise zur Raum- und/oder Brauchwasserbeheizung angeschlossen. Es kann sich bei dieser Heizanlage 59 auch um ein Fernwärmenetz handeln, es kann auch eine landwirtschaftliche und/oder gartenbauliche Heizanlage, vorzugsweise eine Erdboden-, Fischgewässer- und/oder Gewächshausheizanlage sein. Ferner kann an diesen Zuführungsleitungen 58a und 58b auch eine Einrichtung 60 zur Durchführung eines verfahrenstechnischen Prozesses, vorzugsweise eines Trocknungs-, Siede-, Destillations-, Wasserentsalzungs- und/oder eines chemischen Prozesses als wärmeverbrauchender Anlagenteil angeschlossen sein.

In der Zuführungsleitung 58a befindet sich eine Pumpe 61 für das Wärmetransportmedium. An den Zuführungsleitungen

0084815

58a und 58b ist noch die Sekundärseite des Kondensators 44 angeschlossen, der der Dampfturbine 42 zugeordnet ist.

Als Verbrennungsvorrichtung für Wasserstoffgas aus dem Speichertank 34 kann günstigerweise noch eine Brennstoffzelle 67 vorgesehen sein, die über Zuführungsleitungen 68 und 69 an den Speichertanks 34 und 35 für Wasserstoffgas und Sauerstoffgas angeschlossen ist und die elektrische Leistung in das elektrische Verbrauchernetz 33 einspeist.

In der Anlage nach Fig. 2 wird also die Abwärme des Blocks 32 aus Wasserelektrolysezellen als Nutzwärme für ein Fernwärmeinselnetz verwendet. Das in den Wasserelektrolysezellen anfallende Wasserstoffgas wird gespeichert und steht bei Spitzenstrombedarf als Brennstoff für das aus der Dampfturbine 42 und dem Generator 46 bestehende Spitzenlastkraftwerk zur Verfügung, das bei Spitzenbedarf elektrische Leistung in das elektrische Verbrauchernetz 33 des von dem Grundlastkraftwerk weit entfernte Wohngebiet einspeist.

Ähnlicherweise kann auch eine Anlage nach Fig. 2 zur Trinkwasserversorgung eines Wohngebietes herangezogen werden, das weit entfernt von einem Grundlastkraftwerk ist. Zu Schwachlastzeiten des elektrischen Verbrauchernetzes 33 wird der Block 32 aus Wasserelektrolysezellen mit Hilfe des weit entfernten Grundlastkraftwerkes betrieben und seine Abwärme als Nutzwärme zum Betrieb einer Meerwasserentsalzungsanlage herangezogen. Das in den Wasserelektrolysezellen anfallende Wasserstoffgas wird gespeichert und kann bei Spitzenleistungsbedarf im elektrischen Verbrauchernetz 33 im aus der Dampfturbine 42 und dem elektrischen Generator 46 bestehenden Spitzenlastkraftwerk verbrannt werden.

Anstelle der Dampfturbine 42 und des $H_2/O_2$-Dampferzeugers 36 kann auch eine Gasturbine mit entsprechender Verbrennungskammer für das Wasserstoffgas aus dem Speichertank 34 als dem Spitzenlastkraftwerk zugeordnete Verbrennungskraftmaschine verwendet werden. An die Stelle des Kondensators 44 tritt dann ein Abgaswärmetauscher.

12 Patentansprüche
2 Figuren

0084815

KRAFTWERK UNION
AKTIENGESELLSCHAFT

Unser Zeichen

VPA 82 P 6002 E

Patentansprüche

1. Wärmekraftwerk mit einem elektrischen Generator und mit einem am Generator angeschlossenen Block aus Elektrolysezellen, dem eine Heizanlage zur Ableitung der Verlustwärme zugeordnet ist,
d a d u r c h   g e k e n n z e i c h n e t ,
daß Flüssigwasser-Elektrolysezellen (14, 32) verwendet sind, die parallel zu einem weiteren elektrischen Verbrauchernetz (12, 33) geschaltet sind, dem Flüssigwasser-Elektrolysezellen ein Speichertank (15, 34) für Wasserstoffgas mit nachgeschalteter Verbrennungsvorrichtung (17, 36) zugeordnet ist und daß die vom Wärmetauscher (14a; 53) abgeführte Verlustwärme einer Heizanlage (8, 59, 60) zugeführt wird.

2. Wärmekraftwerk nach Anspruch 1,
d a d u r c h   g e k e n n z e i c h n e t ,
daß eine Regelvorrichtung (13, 19, 20, 21) vorgesehen ist, die die Leistung des Blocks (14) aus Flüssigwasser-Elektrolysezellen so regelt, daß sie gleich der Differenz zwischen der Leistung des elektrischen Generators (11) und der in das Verbrauchernetz (12) einzuspeisenden elektrischen Leistung ist.

3. Wärmekraftwerk nach Anspruch 1,
d a d u r c h   g e k e n n z e i c h n e t ,
daß die Verbrennungsvorrichtung ein $H_2/O_2$-Dampferzeuger (35) ist.

Stk 2 Ste - 29.11.1982

0084815

4. Wärmekraftwerk nach Anspruch 1,

d a d u r c h  g e k e n n z e i c h n e t ,

daß die Verbrennungsvorrichtung eine Verbrennungskraftmaschine (17) ist.

5. Wärmekraftwerk nach Anspruch 1,

d a d u r c h  g e k e n n z e i c h n e t ,

daß die Verbrennungsvorrichtung eine Brennstoffzelle
(67) ist.

6. Wärmekraftwerk nach Anspruch 1,

d a d u r c h  g e k e n n z e i c h n e t ,

daß die Verbrennungsvorrichtung einem Spitzenlastkraftwerk (34 bis 46) zugeordnet ist.

7. Wärmekraftwerk nach Anspruch 1,

d a d u r c h  g e k e n n z e i c h n e t ,

daß die Heizanlage ein Vorwärmer (8) für das Speisewasser eines Dampferzeugers (2) des Wärmekraftwerkes
ist.

8. Wärmekraftwerk nach Anspruch 1,

d a d u r c h  g e k e n n z e i c h n e t ,

daß die Heizanlage (59) einem Fernwärmenetz zugeordnet
ist.

9. Wärmekraftwerk nach Anspruch 1,

d a d u r c h  g e k e n n z e i c h n e t ,

daß die Heizanlage (59) zu landwirtschaftlichen und/oder
gartenbaulichen Zwecken, vorzugsweise zur Erdboden-,
Fischgewässer- und/oder Gewächshausaufheizung verwendet
wird.

10. Wärmekraftwerk nach Anspruch 1,

d a d u r c h  g e k e n n z e i c h n e t ,

daß die Heizanlage eine Einrichtung (60) zur Durchführung eines verfahrenstechnischen Prozesses, vorzugs-

0084815

VPA 82P6002 5

weise eines Trocknungs-, Siede-, Destillations-, Wasser-entsalzungs- und/oder chemischen Prozesses ist.

11. Wärmekraftwerk nach Anspruch 4,
d a d u r c h   g e k e n n z e i c h n e t ,
daß eine Abtriebswelle der Verbrennungskraftmaschine (17) an einer Antriebswelle einer Kompressionswärmepumpe (7) angeschlossen ist, die einen Ausgangswärmetauscher zur Ableitung von Kondensationswärme aufweist, welcher mit dem wärmeverbrauchenden Anlagenteil gekoppelt ist.

12. Wärmekraftwerk nach Anspruch 1,
d a d u r c h   g e k e n n z e i c h n e t ,
daß der Verbrennungsvorrichtung für Wasserstoffgas ein Zusatzwärmetauscher (44) zur Ableitung der Verlustwärme an die Heizanlage (59, 60) zugeordnet ist.

BAD ORIGINAL

0084815

82 P 6002

FIG 1

FIG 2

2/2

0084815

82 P 6002